Europäisches Patentamt

European Patent Office

Office européen des brevets

(19)

(11) **EP 1 598 200 A2**

(12) **EUROPEAN PATENT APPLICATION**

(43) Date of publication:
**23.11.2005 Bulletin 2005/47**

(51) Int Cl.[7]: **B41J 2/45**, B41J 2/447,
G06K 15/12

(21) Application number: **05011031.1**

(22) Date of filing: **20.05.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **21.05.2004  JP 2004151306
21.05.2004  JP 2004151307**

(71) Applicant: **SEIKO EPSON CORPORATION
Shinjuku-ku, Tokyo 163-0811 (JP)**

(72) Inventors:
• **Tsujino, Kiyoshi**
  **Suwa-shi Nagano 392-8502 (JP)**
• **Nomura, Yujiro**
  **Suwa-shi Nagano 392-8502 (JP)**
• **Ikuma, Ken**
  **Suwa-shi Nagano 392-8502 (JP)**

(74) Representative: **HOFFMANN EITLE
Patent- und Rechtsanwälte
Arabellastrasse 4
81925 München (DE)**

(54) **Line head and image forming apparatus incorporating the same**

(57)     At least one light emission array (7) includes a plurality of light emitting elements (Ea) arrayed in a first direction. Each of the light emitting elements (Ea) is an organic electroluminescence element. A controller (8) performs a constant voltage control with respect to the light emitting elements (Ea). A current detector (5) collectively detects a drive current flowing in each of the light emitting elements (Ea). A checker (3) checks light emitting characteristics of at least one of the light emitting elements (Ea) in accordance with the detected drive current.

*FIG. 1*

EP 1 598 200 A2

**Description**

BACKGROUND OF THE INVENTION

The present invention relates to a line head using organic EL (electroluminescence) elements and an image forming apparatus incorporating such a line head.

There has been developed image forming apparatus in which a line head having a large number of arrayed light emitting devices is used as an exposure unit. Japanese Patent Publication No. 11-138899A discloses an image forming apparatus in which a light emitting device array made of a plurality of light emitting devices is integrated in a single chip so as to form an exposure unit. In this example, single-chip light emitting device arrays for respective colors are once formed on a single substrate and then separated. The single-chip light emitting device arrays are disposed in corresponding color developing units respectively. Thus, the variation in light emitting characteristic is canceled.

In addition to light emission diodes (LEDs), organic EL elements have been proposed as light emitting devices applicable to such a line head. There is an advantage that the organic EL elements can be controlled statically so that a control system therefor can be simplified. In a line head using a plurality of light emitting devices made of organic EL elements, the light emitting devices may be driven by constant current control or constant voltage control in order to keep the quantities of light emission from the light emitting devices constant.

In a case where the light emitting devices are often driven by constant voltage control with a comparatively simple circuit configuration, the operating time period may exceed a predetermined time period when light emitting devices made of organic EL elements are driven by constant voltage control. In such a case, it has been known that the emitted light amount from each light emitting device is lowered due to a change in resistance value of the light emitting device caused by the intrinsic characteristic proper to the organic EL element.

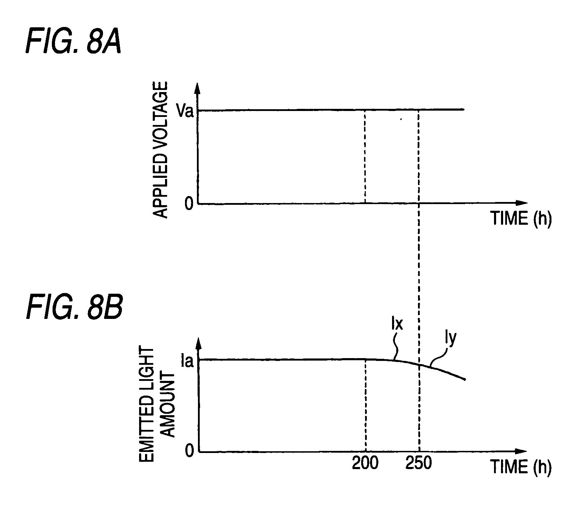

Assume that a constant voltage Va is applied to each light emitting device as shown in Fig. 8A. In this case, the emitted light amount has a constant value la till the operating time period reaches a predetermined time period or 200 hours in this example, as shown in Fig. 8B. When the operating time period exceeds 200 hours, the emitted light amount begins to decrease from the value la to a value lx. When the operating time period exceeds 250 hours, the emitted light amount further decreases to a value ly.

The technique disclosed in the above publication also touches on use of organic EL elements as light emitting elements in addition to use of LEDs. However, there is no suggestion about a solution to the lowering of the emitted light amount when the operating time period exceeds a predetermined value as shown in Figs. 8A and 8B in the case where organic EL elements are controlled by constant voltage control. That is, because the characteristics of the light emitting elements are not checked, there is a problem that the technique cannot rapidly deal with the situation such as deterioration in image quality caused by the lowering of the emitted light amount.

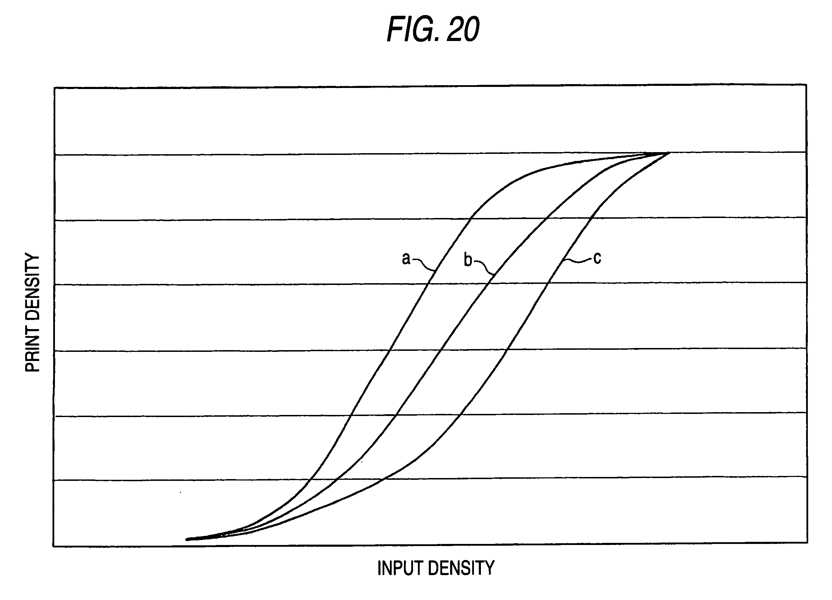

In a line head using a plurality of light emitting elements made of organic EL elements, gradation control may be performed for expressing halftones. Fig. 20 is a characteristic diagram showing the relationship between input density and print density when gradation control is performed. When light emitting elements made of organic E1. elements are used in a line head, there appears a difference in gradation expression characteristic due to a structural difference inherent in the light emitting elements, such as composition ratio of materials. That is, the characteristic of a light emitting element $\underline{b}$ is regarded as a reference characteristic. In this case, when the input density is set to be constant, there are light emitting elements $\underline{a}$ higher in output density (larger in light emission amount) than the reference characteristic, and light emitting elements $\underline{c}$ lower in output density (smaller in light emission amount) than the reference characteristic.

In the above publication, there is no suggestion about a solution to a difference in gradation expression as shown in Fig. 20, which difference appears when gradation control is performed in a line head in which light emitting elements made of organic EL elements are arrayed. Accordingly, there is a problem of deterioration in image quality such as occurrence of unevenness in density in an image.

**SUMMARY OF THE INVENTION**

It is therefore an object of the invention to provide a line head and image forming apparatus which can deal with deterioration of image quality or the like by checking the characteristics of light emitting elements when constant voltage control is performed upon organic EL elements.

It is also an object of the invention to provide a line head and image forming apparatus in which difference in gradation expression characteristic among light emitting elements is eliminated when gradation control is performed using the light emitting elements.

In order to achieve the above objects, according to the invention, there is provided a line head, comprising:

at least one light emission array including a plurality of light emitting elements arrayed in a first direction, each of which is an organic electroluminescence element;

a controller, which performs a constant voltage control with respect to the light emitting elements;

a current detector, which collectively detects a drive current flowing in each of the light emitting elements; and

a checker, which checks light emitting characteristics of at least one of the light emitting elements in accordance with the detected drive current.

With this configuration, a process corresponding to the result of checking the characteristics can be carried out rapidly, In addition, since the current detector is commonly provided for the respective light emitting elements, the cost and space can be saved.

Preferably, the checker measures an emitted light amount of each of the at least two of the light emitting elements.

Preferably, the detected drive current is input to the controller in a feed back control manner.

Preferably, the checker checks whether the at least one of the light emitting elements is related to pixel defect.

Preferably, the check is performed with respect to each of the light emitting elements.

Preferably, the light emitting elements are divided into a plurality of groups, and the check is performed with respect to each of the groups.

Preferably, the check is simultaneously performed with respect to the respective light emitting elements.

Preferably, each of the light emitting elements is driven by a field effect transistor, and a condenser is connected between a gate electrode and a drain electrode of the field effect transistor.

Preferably, the constant current control is performed by increasing a drive voltage for the at least one of the light emitting elements, when the result of the comparison indicates that an emitted light amount of the at least one of the light emitting elements becomes lower than a threshold value.

Preferably, a plurality of light emission arrays are arranged in a second direction which is perpendicular to the first direction.

According to the invention, there is also provided an image forming apparatus, comprising:

an image carrier, having a photoconductive surface;

the above line head, which emits light to form an electrostatic latent image on the photoconductive surface; and

a developing device, which supplies developer onto the photoconductive surface to make the electrostatic latent image visible.

According to the invention, there is also provided a line head, comprising:

at least one light emission array including a plurality of light emitting elements arrayed in a first direction, each of which is an organic electroluminescence element;

a storage, which stores a reference light emission characteristics;

a detector, which quantitatively detects a light emitting state of at least one of the light emitting elements to obtain a detected amount; and

a controller, which controls an emitted light amount of the at least one of the light emitting elements in accordance with the detected amount and the reference light emission characteristics.

With this configuration, it is possible to design the line head in which there is no difference in gradation expression characteristics among the light emitting elements when halftones are expressed.

Preferably, the detector detects an emitted light amount of the at least one of the light emitting elements.

Preferably, the detector detects a drive current flowing in the at least one of the light emitting elements.

Preferably, the control of the emitted light amount is performed with respect to each of the light emitting elements.

Preferably, the light emitting elements are divided into a plurality of groups, and the control of the emitted light amount is performed with respect to each of the groups.

Preferably, the control of the emitted light amount is simultaneously performed with respect to the respective light emitting elements.

Preferably, the line head further comprises a counter, which counts an amount indicative of a used state of at least one of the light emitting elements. The detector detects the light emitting state at a timing according to the amount counted by the counter.

Here, it is preferable that the counter counts a cumulative operating time period of the at least one of the light emitting elements.

It is also preferable that the counter counts the number of a recording medium on which an image formed by the line head is recorded.

It is also preferable that the counter counts the number of formation of a dot array having a predetermined pattern.

Preferably, the line head further comprises a temperature detector, which detects an ambient temperature of the line head. The detector detects the light emitting state at a timing according to the ambient temperature.

According to the invention, there is also provided an image forming apparatus, comprising:

> an image carrier, having a photoconductive surface;
> the above line head, which emits light to form an electrostatic latent image on the photoconductive surface; and
> a developing device, which supplies developer onto the photoconductive surface to make the electrostatic latent image visible.

Preferably, the detector detects the light emitting state after the image carrier is activated.

BRIEF DESCRIPTION OF THE DRAWINGS

The above objects and advantages of the present invention will become more apparent by describing in detail preferred exemplary embodirnents thereof with reference to the accompanying drawings, wherein:

> Fig. 1 is a block diagram showing the schematic configuration of a control section of a line head according to a first embodiment of the invention;
> Fig. 2A is a diagram showing the relationship between the operating time period of each light emitting element in the line head of Fig. 1 and the voltage value applied to the light emitting element;
> Fig. 2B is a diagram showing the relationship between the operating time period of the light emitting element of Fig. 2A and the emitted light amount therefrom;
> Fig. 3 is an explanatory view of a first modified example of the line head of Fig. 1;
> Fig. 4 is a circuit diagram of a circuit for performing the constant voltage control in the line head of Fig. 3;
> Fig. 5 is a circuit diagram of a second modified example of the line head of Fig. 1;
> Fig. 6 is a circuit diagram showing an example of how to control the voltage applied to an individual light emitting element in Fig. 4;
> Fig. 7 is a flow chart showing operations of a line head according to a second embodiment of the invention;
> Fig. 8A is a diagram showing the relationship between the operating time period of each light emitting element in a related-art line head and the voltage value applied to the light emitting element;
> Fig. 8B is a diagram showing the relationship between the operating time period of the light emitting element of Fig. 8A and the emitted light amount therefrom;
> Fig. 9 is a block diagram showing the schematic configuration of a control section of a line head according to a third embodiment of the invention;
> Fig. 10 is a schematic plan view of the line head of Fig. 9;
> Fig. 11 is a schematic plan view of a first modified example of the line head of Fig. 9;
> Fig. 12 is a block diagram showing an example of use of a counter for the line head of the above embodiments;
> Fig. 13 is a diagram showing operation timings of a second modified example of the line head of Fig. 9;
> Fig. 14 is a block diagram showing the configuration of a control section of an image forming apparatus incorporating the line head of the invention;
> Fig. 15 is a schematic section view of a first example of an image forming apparatus incorporating the line head of the invention;
> Fig. 16 is a schematic section view of a second example of an image forming apparatus incorporating the line head of the invention;
> Fig. 17 is a table showing data relationships used in the line head of Fig. 9;
> Fig. 18 is a block diagram showing data processing performed in the line head of Fig. 9;
> Figs. 19A to 19C are diagrams showing gradation control performed in the line head of Fig. 9; and
> Fig. 20 is a diagram showing the relationship between input density and print density when gradation control is performed.

DETAILED DESCRIPTION OF THE EMBODIMENTS

Embodiments of the invention will be described below in detail with reference to the accompanying drawings.

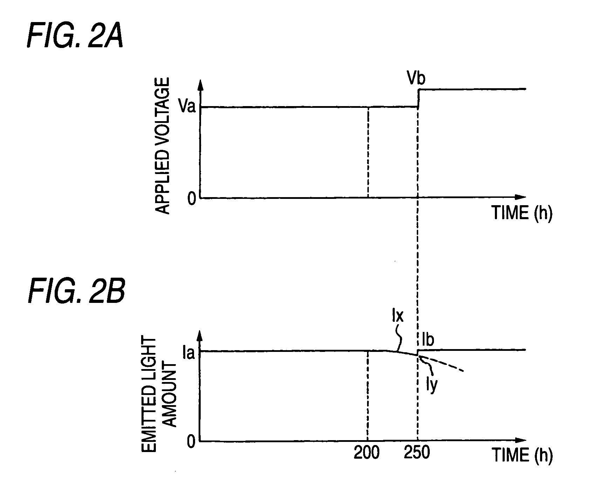

Figs. 2A and 2B show an operation principle of a line head according to a first embodiment of the invention. In this embodiment, constant voltage control is performed on light emitting elements with a voltage whose value is increased as soon as the operating time period of each light emitting element exceeds a predetermined time period, for example, 250 hours. The lowered emitted light amount is increased by such a constant voltage control to be restored to its initial emitted light amount.

Fig. 2A shows the relationship between the operating time period of each light emitting element and the voltage value applied to the light emitting element. In this example, a constant voltage Va is initially applied to the light emitting element so as to perform constant voltage control thereon. As soon as the operating time period of the light emitting element exceeds 250 hours, the driving voltage is increased from the value Va to a value Vb, with which constant voltage control is performed on the light emitting element. That is, constant voltage control is performed on the light emitting element with an applied voltage being changed in accordance with the operating time period. In such a manner, the voltage control performed on each light emitting element according to the embodiment of the invention is a constant voltage control with an applied voltage whose value is changed stepwise in accordance with the operating time period of the light emitting element. Accordingly, deterioration in image quality can be prevented in a simple way.

Fig. 2B shows the relationship between the operating time period of each light emitting element and the emitted light amount therefrom. The emitted light amount from the light emitting element decreases from an initial value la to a value lx when the operating time period exceeds 200 hours. Assume that the operating time period further increases, and the operating time period of the light emitting element exceeds 250 hours. In this case, the applied voltage is increased from the value Va to the value Vb as described above. Accordingly, as for the emitted light amount, the characteristic in which the emitted light amount has decreased from the value la to the value lx is improved to the characteristic in which the emitted light amount reaches a value Ib substantially close to the initial value la.

The emitted light amount of each light emitting element made of an organic EL element increases as a driving current applied thereto increases, and decreases as the driving current decreases. In such a manner, there is a correlation between the emitted light amount of the light emitting element and the driving current. Accordingly, the emitted light amount of the light emitting element can be determined by measuring the driving current. In this embodiment, paying attention to such a characteristic of the light emitting element, the characteristic of the light emitting element, that is, the emitted light amount thereof is checked by measuring the driving current.

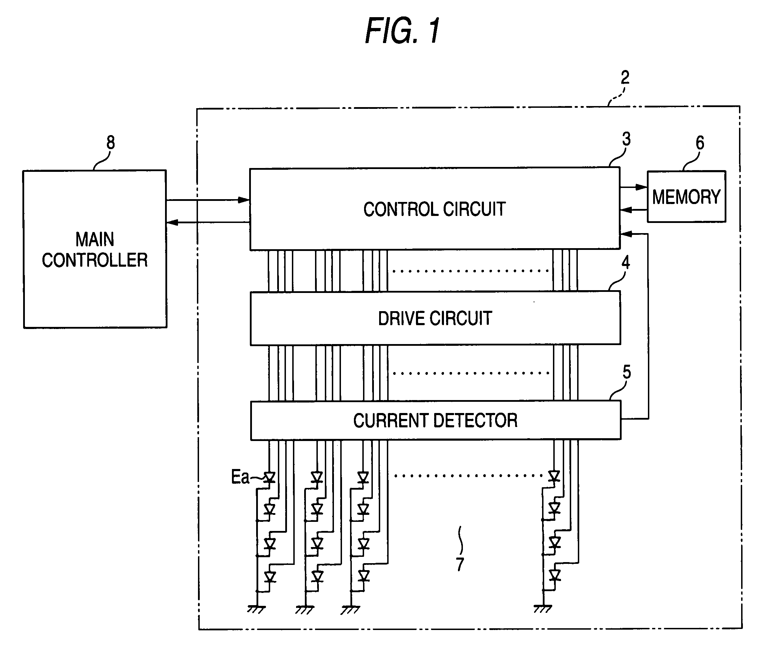

Fig. 1 is a block diagram showing the schematic configuration of a control section of a line head. Light emitting element arrays 7 are arranged in a secondary scanning direction so that each array extending in a primary scanning direction has a plurality of light emitting elements Ea.

In this embodiment, a plurality of light emitting elements Ea are disposed in a matrix manner so as to be arrayed in the primary scanning direction and in the secondary scanning direction. The current detector 5 serves to check the characteristics of the light emitting elements collectively. That is, the current detector 5 measures the driving currents of the light emitting elements collectively so as to indirectly measure the emitted light amounts of the light emitting elements as shown in Fig. 2B.

A main controller 8 generates print data and transmits the print data to the control section 2 of the line head. A memory 6 stores a characteristic of each light emitting element Ea, for example, a relationship between an operating time period and an emitted light amount as shown in Fig. 2B. The main controller 8 generates a relationship between the operating time period and a voltage to be applied as shown in Fig. 2A, and transmits the generated relationship to the control circuit 3. The control circuit 3 stores the received relationship in the memory 6.

The control circuit 3 reads out the relationship between the operating time period and the emitted light amount (see Fig. 2B) which is stored in the memory 6, and compares with the current value detected by the current detector 5.

As a result of the comparison, when it is concluded that the emitted light amount has been lowered to a value corresponding to the operating time period of 250 hours or more, constant voltage control is performed with the applied voltage being increased from the value Va to the value Vb. In such a manner, constant voltage control is performed upon the light emitting elements individually by the drive circuit 4. Thus, a high quality image can be formed even when the operating time period of each light emitting element exceeds a predetermined time period.

In the embodiment, a drive circuit 4 applies voltages to the individual light emitting elements Ea respectively so as to perform constant voltage control. However, one and the same voltage may be applied to all the light emitting elements forming the same array extending in the primary scanning direction. With such a configuration, constant voltage control can be performed upon a plurality of light emitting elements more simply,

In addition, since the control circuit 3 always compares with the current value detected by the current detector 5 and the relationship stored in the memory 6, the lowering of the emitted light amount caused by the long time operation of the light emitting element is dealt with rapidly so that deterioration in image quality can be prevented.

In the embodiment, a plurality of light emitting element arrays are provided in the secondary scanning direction of a line head. Accordingly, the line head can perform the multiple exposure. In addition, an image can be formed by one array extending in the primary scanning direction while the other arrays serve as spares for failure of the image forming line. In such a manner, the image forming apparatus can be applied to various applications due to the plurality of light emitting element arrays provided in the secondary scanning direction of the line head.

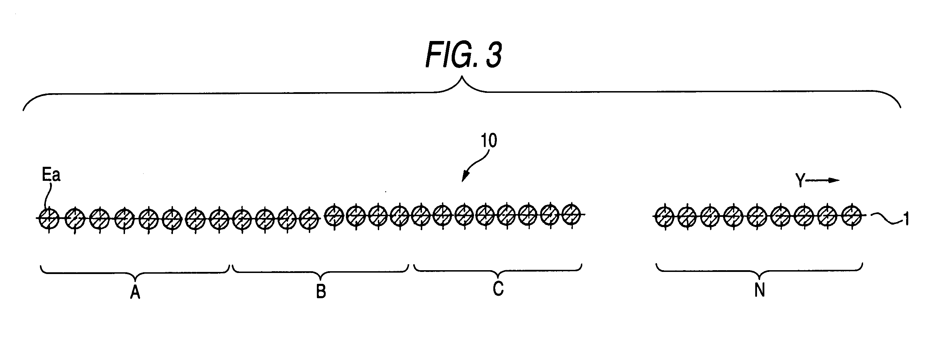

The line head according to the invention is not limited to the embodiment in which a plurality of light emitting element arrays are provided in the secondary scanning direction as shown in Fig. 1. As shown in Fig. 3, one light emitting element array 1 is provided in a line head 10. A plurality of light emitting elements Ea comprised of organic EL elements are arrayed in the light emitting element array 1 in a primary scanning direction (Y-direction).

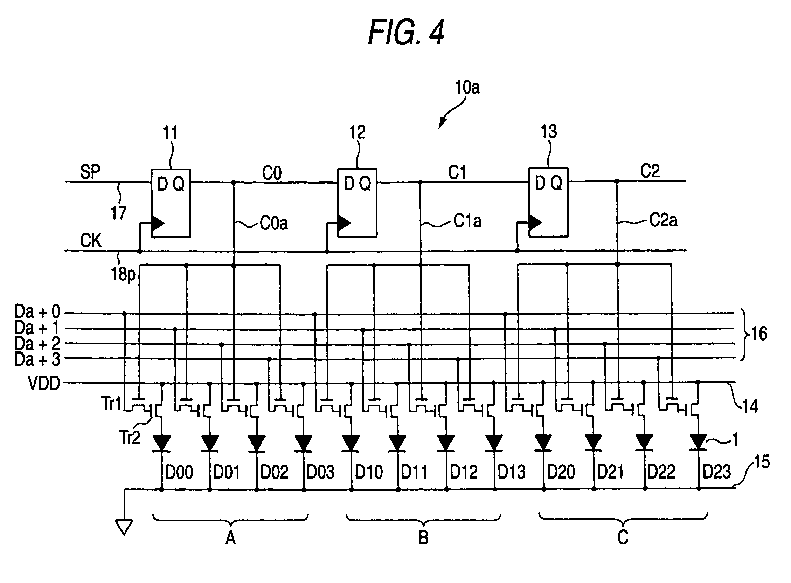

The light emitting element array 1 is divided into a plurality of blocks A, B, C, .... and N. In this case, constant voltage control as shown in Fig. 2A can be performed not only by the element basis (dot basis) as described the above, but also by the block basis. In the case where constant voltage control is performed thus by the block basis, deterioration in image quality can be prevented when various image patterns are formed. How to perform this block-basis constant voltage control will be described with reference to Fig. 4.

In Fig. 4, a light emitting element array 1 is provided in a line head 10a. Light emitting elements D00-D23 using organic EL elements are arrayed in the light emitting element array 1. A positive power supply line 14 is connected in common to anodes of the light emitting elements D00-D23 in the light emitting element array 1. On the other hand, a negative power supply line 15 is connected to cathodes of the light emitting elements D00-D23 in the light emitting element array 1. The light emitting element array 1 is connected between the power supply lines 14 and 15.

Shift register circuits 11-13 for controlling the light emitting elements D00-D23 by the block basis. An output signal C0 of the shift register circuit 11 controls the block A including the light emitting elements D00-D03. An output signal C1 of the shift register circuit 12 controls the block B including the light emitting elements D10-D13, and an output signal C2 of the shift register circuit 13 controls the block C including the light emitting elements D20-D23.

A start pulse SP is supplied to a data terminal D of the shift register 11 through a signal line 17. A clock signal CK is supplied to the respective shift registers 11 to 13 through a signal line 18. Signal lines 16 are for supplying data signals Dat0-Dat3 to the respective light emitting elements. Driving transistors Tr2 are connected to anodes of the light emitting elements respectively. Sources of control transistors Tr1 are connected to gates of the driving transistors Tr2 respectively. The control transistors Tr1 and the driving transistors Tr2 are, for example, constituted by field effect transistors (FET).

The output signal C0 output from an output terminal Q of the shift register circuit 11 is applied through a signal line C0a to the gates of the control transistors Tr1 connected to the light emitting elements D00-D03. The output signal C1 from the shift register circuit 12 is applied through a signal line C1 a to the gates of the control transistors Tr1 connected to the light emitting elements D10-D13. The output signal C2 from the shift register circuit 13 is applied through a signal line C2a to the gates of the control transistors Tr1 connected to the light emitting elements D20-D23.

In such a manner, the shift register circuit 11 selects the light emitting elements D00-D03 of the block A from the light emitting elements of the light emitting element array 1. On the other hand, the shift register circuit 12 selects the light emitting elements D10-D13 of the block B, and the shift register circuit 13 selects the light emitting elements D20-D23 of the block C.

When the output signal C0-C2 of each shift register circuit is in an H level, the signal is applied to the grates of the control transistors Tr1 for controlling the light emitting elements belonging to the corresponding block. The light emitting elements are connected in parallel between the positive power supply line 14 applied with a positive voltage VDD and the negative power supply line 15. When the shift registers are used thus, block selection can be performed with a simple pulse-driven configuration.

Next, description will be made about the data signals Dat0-Dat3 of the data lines 16. The data signals are supplied to drains of the control transistors Tr1 respectively. Accordingly, when the data signals Dat0-Dat3 are supplied to the control transistors Tr1 of the light emitting elements selected by the aforementioned block selection signals, the driving transistors Tr2 connected to the selected control transistors Tr1 are electrically connected so that the corresponding light emitting elements are activated. Incidentally, similar operation can be performed in the configuration where the block selection signals are connected to the drains of the control transistors Tr1 while the data lines are connected to the gates of the control transistors Tr1.

For example, in the block A, the data signals Dat0-Dat3 are supplied to the control transistors Tr1 for controlling the light emitting elements D00-D03, respectively. That is, the data signals Dat0-Dat3 serve as selection signals for selecting individual light emitting elements in one and the same block. In such a manner, in the line head according to the invention, individual light emitting elements can be selected and operated to be turned on. Incidentally, the data signals Dat0-Dat3 are converted from shading data to time data, and then supplied to the respective light emitting elements.

In Fig. 4, the shift register circuits 11-13 serve as the units for selecting blocks of light emitting elements as described above. The positive voltage VDD is supplied from the power supply line 14 to the light emitting elements belonging to ones of the blocks A, B and C selected by the shift register circuits 11-13. Thus, constant voltage control with the initial voltage Va is performed. In addition, constant voltage control with the voltage increased from the value Va to the value Vb as described in Fig. 1A can be performed.

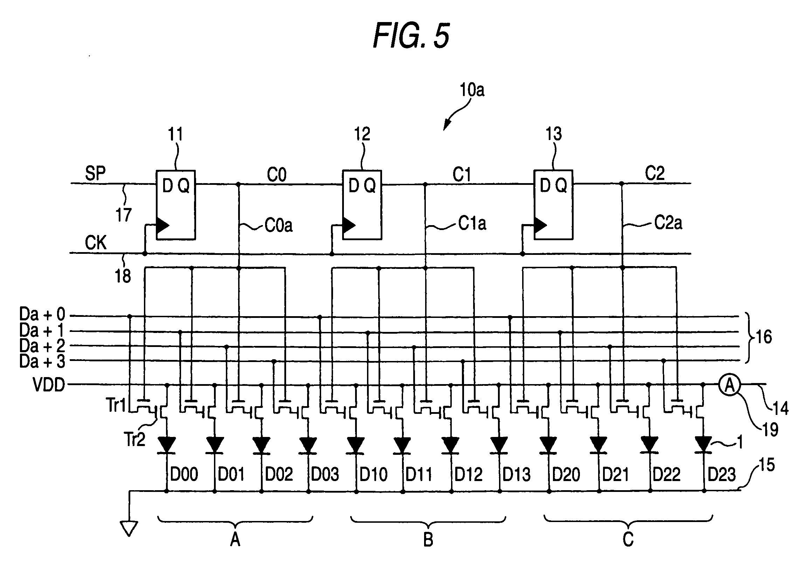

As shown in Fig. 5, the current, detector may be configured so as to collectively measure the driving current for the respective light emitting elements. Specifically, a current detector 19 is connected to the positive power supply line 14. That is, the current detector 19 corresponds to the current detector 5 in Fig. 1, and measured values of the current detector 19 are fed back to a not-shown control circuit.

The current detector 19 measures a driving current of each light emitting element. In this case, for example, when the driving current of the light emitting element D00 is measured, the control transistor Tr1 and the driver transistor Tr2 for the light emitting element D00 are turned on. The control transistors Tr1 and the driver transistors Tr2 for the other light emitting elements D01-D23 are turned off. When the driving current of another light emitting element is measured, the transistors of the light emitting element in question are turned on while the other transistors are turned off.

The value of the measured driving current of each light emitting element is compared with a reference value so as to check the characteristic of the light emitting element, such as the emitted light amount. The reference value is defined suitably as an average value of driving currents of light emitting elements manufactured in one lot, a lower limit value of a driving current by which a required emitted light amount can be obtained, or the like. The value of the measured driving current of each light emitting element can be stored in the memory 6 in Fig. 1.

Thus, when the driving current of each light emitting element is measured and stored in the memory 6 at the time of factory shipment, the initial value of the driving current of the light emitting element is stored. When the initial value of the driving current stored thus in the memory 6 is compared with the value of a measured driving current of each light emitting element by the control circuit 2 in Fig. 1 after the use of the line head, the degree of deterioration of the light emitting element can be determined. In this case, only one current detector 19 is commonly provided for the light emitting elements. Accordingly, the cost and the space can be saved.

The current detector 19 can measure driving currents of the light emitting elements in a block basis. For example, when a total of driving currents of the light emitting elements belonging to the block A in Fig. 5 is measured, the control transistors Tr1 and the driver transistors Tr2 for the light emitting elements belonging to the block A are turned on. The control transistors Tr1 and the driver transistors Tr2 of the light emitting elements belonging to the other blocks are turned off.

When an image is formed by gradation control, the emitted light amount of light emitting elements may differ from one block to another. Therefore, the degree of deterioration of the light emitting elements differs from one block to another. When a total of driving currents is measured and compared with a reference value in a block basis, the characteristics of the light emitting elements can be checked in a block basis. The reference value on this occasion is defined suitably as an average value of totals of driving currents measured in a block basis, a lower limit value of a driving current by which a required emitted light amount can be obtained, or the like. When the characteristics of the light emitting elements are checked thus in a block basis, the time can be shortened as compared with that when the characteristics of the light emitting elements are checked individually.

The current detector 19 shown in Fig. 5 can measure a total of driving currents of all the light emitting elements arrayed in the light emitting element line 1. In this case, the control transistors Tr1 and the driver transistors Tr2 for the light emitting elements D00-D23 are turned on. The total sum of measured driving currents of all the light emitting elements in the light emitting element line 1 is compared with a reference value based on an average value or a lower limit value defined as a driving current for light emitting elements in the same array. Since the characteristics of the light emitting elements are checked in an array basis, the characteristics of the light emitting elements arrayed in the line head can be checked rapidly.

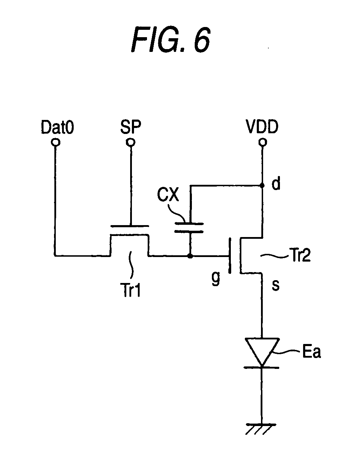

Fig. 6 is a circuit diagram showing an example of how to control the voltage applied to an individual light emitting element Ea in Fig. 4. A capacitor Cx is connected between a gate electrode g and a drain electrode $\underline{d}$ of a driving transistor Tr2. When the gate electrode g and the drain electrode d of the driving transistor Tr2 are short-circuited in the configuration of Fig. 5, a gate-source voltage Vgs and a drain-source voltage Vds in the driving transistor Tr2 become equal to each other.

The voltage Vgs at this time is stored in the capacitor Cx. In this event, an analog current supplied from the power supply VDD to the light emitting element Ea is switched to a constant voltage. In the invention, by use of such a principle, constant voltage control is performed upon the light emitting element Ea with the capacitor Cx being connected between the gate and the source of the driving transistor Tr2 (FET).

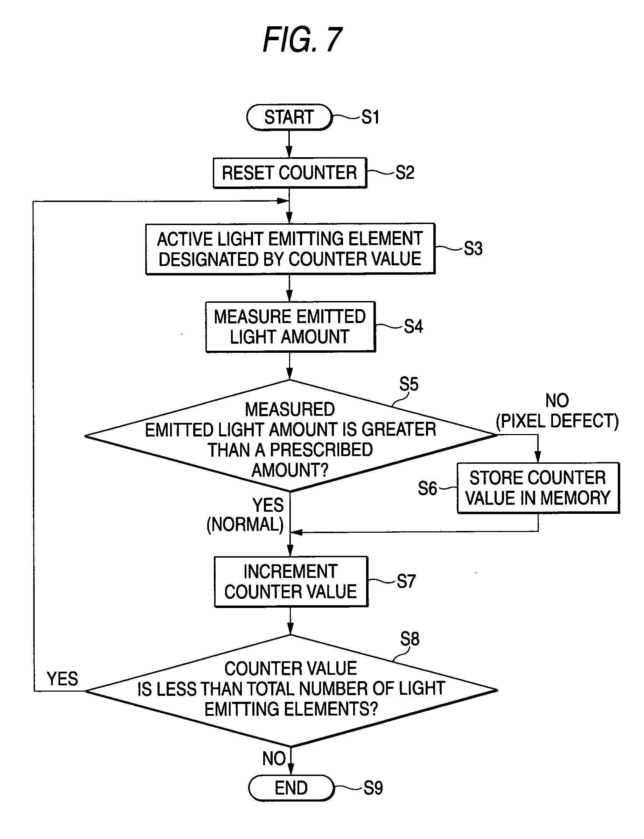

Next, a second embodiment of the invention will be described with reference to Fig. 7. In this embodiment, a driving current of each light emitting element is measured for checking a pixel defect. After a processing program is started (Step S1), a counter is first reset (Step S2). This counter counts the number of detection for emitted light amount performed.

Subsequently, a light emitting element in an address indicated by the counter value is turned on (Step S3). This address is set by specifying a light emitting element array (primary scanning direction) and a light emitting element group (secondary scanning direction) for each of light emitting elements arranged in a matrix manner. Next, the emitted light amount, that is, the driving current of the light emitting element of interest is measured (Step S4).

The measured emitted light amount corresponding to the measured driving current is compared with a predetermined emitted light amount stored in advance. When the measured emitted light amount is smaller than the predetermined emitted light amount, that is, when the result of determination in Step S5 is No, it is concluded that there is a pixel defect in the light emitting element, and the counter value is stored in the memory (Step S6). That is, the primary scanning direction (Y) position and the light emitting element group (X) position of the light emitting element having a pixel defect is specified and stored in the memory.

Next, the counter value is increased by one (Step S7), and the counter value is compared with the number of light emitting elements arrayed in the line head (Step S8). When the counter value is smaller than the number of light emitting elements (the result of determination in Step S8 is Yes), the processing routine returns to the processing of Step S3, repeating the loop process of Steps S3-S8. When the counter value is not smaller than the number of light emitting elements (the result of determination in Step S8 is No), the processing routine escapes from the loop process and terminates the processing program in Step S9. In this embodiment, pixel defects are checked by the current detector common to the respective light emitting elements. Accordingly, the configuration for checking the pixel defects is simplified.

Such determination of pixel defects is performed individually by light emitting element, but it can be also performed in a block basis or in an array basis. When pixel defects are checked on a plurality of light emitting elements in a block basis or in an array basis, the measurement of the emitted light amount in Step S4 and the processing of determination by comparison with a predetermined emitted light amount in Step S5 in Fig. 7 are performed upon the light emitting elements in a block basis or in an array basis. In such a manner, pixel defects on a plurality of light emitting elements can be checked efficiently by batch processing in a block basis or in an array basis.

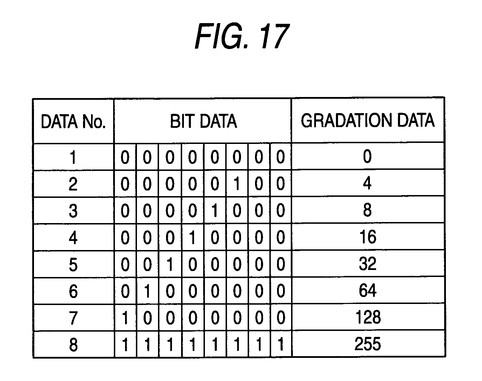

Next, a third embodiment of the invention will be described. As shown in Fig. 17, in this embodiment, gradation data indicative of gradation levels are constituted by an 8-bit gradation data memory. Specifically, bit data No.1 designates gradation data 0 (no light emission), bit data No. 8 designates the highest density data, and bit data No. 2-7 designate halftone density data between the bit data No.1 and the bit data No. 8.

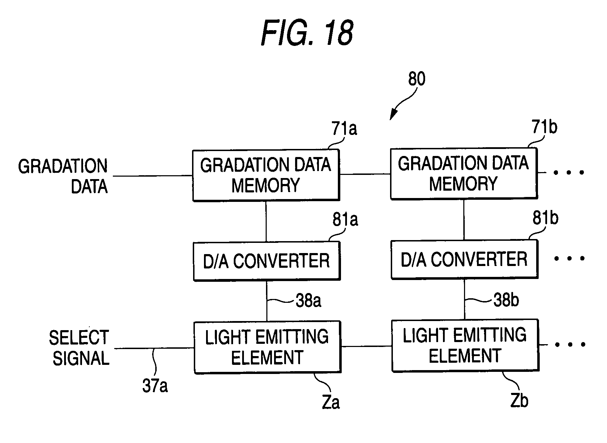

As shown in Fig. 18, each switching TFT is controlled in accordance with an electric amount of a voltage or current corresponding to the magnitude of gradation data. In an electric amount controller 80, D/A converters 81 a, 81b, ... are connected to gradation data memories 71a, 71 b, .... The D/A converters 81a, 81b, ... form analog voltage or current values based on the magnitudes corresponding to gradation data stored in the gradation memories 71a, 71b, ..., and output the analog voltage or current values to the switching TFTs.

A select signal from a scan line 37a and a control signal from a light emission control data line 38a, 38b, ... are supplied to each light emitting element Za, Zb, ... In, this embodiment, the emitted light amount of each light emitting element is changed with a bias of a switching TFT being changed in accordance with the gradation data. As a result, it is not necessary to control on/off of each light emitting element at a high speed. Thus, even when the response speed of the light emitting element is slow, an exposure amount of an image carrier to light can be changed at a high speed.

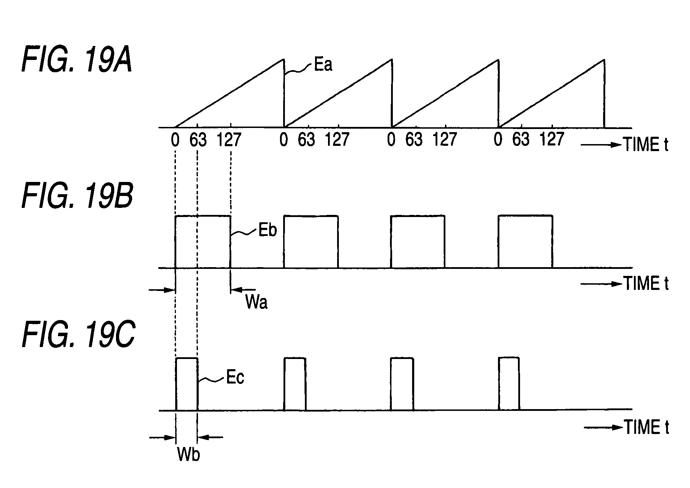

Fig. 19A shows an output value Ea of the counter, repeating increase from 0 to the maximum value (255) as described above. Fig. 19B shows a waveform Eb of a signal output from a comparator, that is, the operating characteristic of a switching TFT when the gradation data is the bit data No. 7 (128th gradation level). In this case, the switching TFT is turned on when the output of the counter is in a range of from 0 to 127, while the switching TFT is turned off when the output of the counter is in a range of from 128 to 255.

Fig. 19C shows a waveform Ec of a signal output from the comparator, that is, the operating characteristic of the switching TFT when the gradation data is the bit data No. 6 (64th gradation level). In this case, the switching TFT is turned on when the output of the counter is in a range of from 0 to 63, while the switching TFT is turned off when the output of the counter is in a range of from 64 to 255.

The pulse width of the waveform Eb is Wa in Fig. 19B, while the pulse width of the waveform Ec is Wb in Fig. 19C, That is, the duration in which the switching TFT is turned on changes in accordance with the value of the gradation data so that the emitted light amount of each light emitting element can be changed. In such a manner, each light emitting element is turned on/off by on/off control of its corresponding switching TFT so that the exposure amount of the image carrier to light can be changed. Thus, the circuit configuration can be simplified.

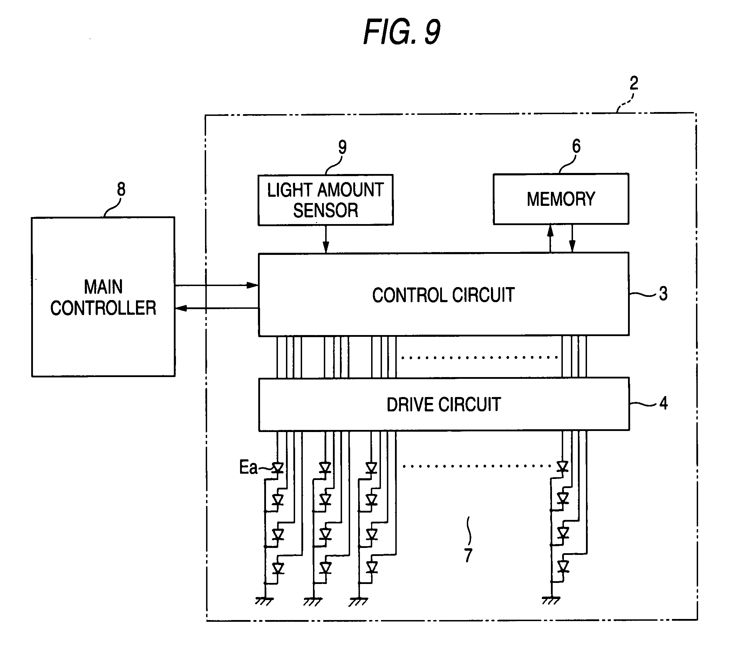

Fig. 9 shows a control section 2 of a line head of this embodiment. In this figure, the reference numeral 3 represents a control circuit; 4, a drive circuit constituted by TFTs; 6, a memory; 7, a plurality of element arrays provided in a secondary scanning direction so that a plurality of light emitting elements Ea are arrayed in each line (primary scanning direction); 8, a main controller; and 9, a light amount sensor. Each detection signal of the light amount sensor 9 is input to the control circuit 3.

The light amount sensor 9 directly measures the optical characteristics of the light emitting elements. When the optical characteristic of each light emitting element is thus measured directly, the gradation expression characteristic of the light emitting element can be grasped accurately so that control can be performed to make the gradation expression characteristic of the light emitting element matched to a reference value.

The main controller 8 generates reference gradation expression characteristic data <u>b</u> shown in Fig. 20 and transmits the reference gradation expression characteristic data <u>b</u> to the control section 2 so that the reference gradation expression characteristic is stored in the memory 6. The control circuit 3 compares the reference gradation expression characteristic with a gradation expression characteristic which is generated based on a measured value of the light amount sensor 9, and sends a control signal to the drive circuit 4 so as to control the light amount of the light emitting element so that the gradation expression characteristic data of the light emitting element coincides with the reference value b.

In this event, control is performed to reduce the emitted light amount when the emitted light amount is larger than the reference value b as shown by the characteristic a in Fig. 20. On the other hand, control is performed to increase the emitted light amount when the emitted light amount is smaller than the reference value b as shown by the characteristic c in Fig. 20. Such light amount control can be attained by controlling the applied voltage or the driving current of each light emitting element. The emitted light amounts of the light emitting elements are controlled individually by light emitting element. Thus, halftones can be expressed accurately, and the gradation expression characteristic can be matched to the reference value.

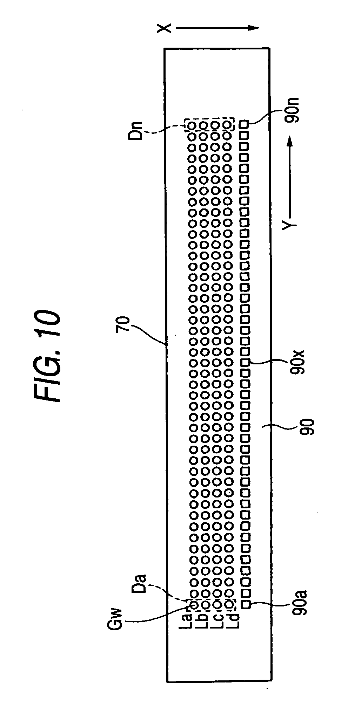

As shown in Fig. 10, four element arrays La-Ld are provided in a primary scanning direction (Y-direction) in a line head 70. In addition, light amount sensors 90 for measuring the light amounts of the light emitting elements individually are provided correspondingly to element groups Da-Dn arrayed in a secondary scanning direction (X-direction). That is, the light amount sensors 90 (90a-90n) are disposed to be as many as the element groups (Da-Dn) of each element array arrayed in the primary scanning direction (Y-direction).

The line head 70 is mounted with a not-shown controller (for example, the control circuit 3 in Fig. 9). An element array La is selected by a Y-driver provided in the controller. On the other hand, an element group Da is selected by an X-driver provided in the controller. In such a manner, the light emitting elements are connected to the controller in a matrix manner so that the light emitting elements can be selected to emit light individually.

For example, a light emitting element Gw is selected thus to emit light by the controller, and the emitted light amount thereof is measured by the light amount sensor 90a. The measuring result is input into a control circuit provided in the controller. Thus, the light emission state of each light emitting element is determined. After that, each light emitting element belonging to the element array La is selected to emit light by the controller in the same manner, and the emitted light amount at that time is detected by the corresponding light amount sensor 90.

The emitted light amount of each light emitting element belonging to another element array Lb-Ld is also measured by the corresponding light amount sensor 90. In the example of Fig. 10, individual light amount sensors are provided in positions corresponding to the light emitting elements of the element groups arrayed in the secondary scanning direction. Accordingly, the emitted light amounts of the light emitting elements belonging to each element group can be measured accurately. In addition, the light amount sensors 90 necessarily installed are fewer than the total number of light emitting elements. Thus, the cost can be reduced. The number of element arrays arrayed in the secondary scanning direction of the line head may be one. When a plurality of lines are arrayed, the number of lines may be set desirably.

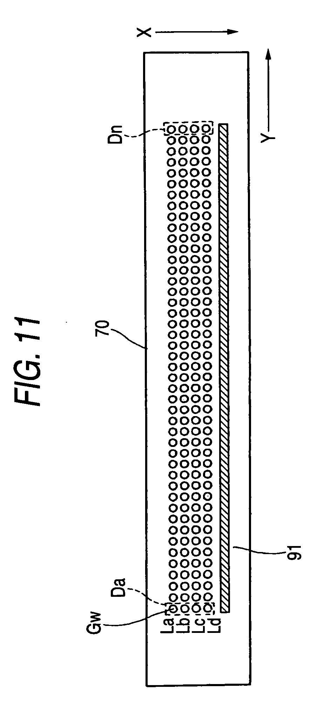

As shown in Fig. 11, a single line sensor 91 may be provided in place of the individual light amount sensors provided correspondingly to the element groups in the secondary scanning direction of each element array La-Ld as shown in Fig. 10. The line sensor 91 is substantially as long as the longitudinal arrangement range of each element array La-Ld arrayed in the primary scanning direction (Y-direction). By use of the line sensor 91 as shown in Fig. 11, the emitted light amount of each light emitting element arrayed in the longitudinal direction of the primary scanning direction can be measured by the single sensor. Accordingly, as compared with the arrangement of Fig. 10, there is an advantage that the light amount sensor cost can be reduced.

Alternatively, only a light amount sensor 90x in a center portion may be provided in place of the individual light amount sensors 90a-90n provided correspondingly to the element groups. In this case, a reference emitted light amount (predetermined emitted light amount) detected by the sensor in accordance with each light emitting element located in each position is stored in advance in a memory.

When a emitted light amount measured by the light amount sensor 90x is compared with the reference emitted light amount, the light emission state of the light emitting element can be determined. That is, the emitted light amounts of light emitting elements arrayed in positions different in distance from the light amount sensor 90x can be measured by only the light amount sensor 90x. Since only the single light amount sensor is provided, the light amount sensor can be installed easily, and the configuration of the line head can be simplified.

In the above embodiments, the light emission state of each light emitting element is measured at predetermined timing by a current detector as shown in Fig. 1 or a light amount sensor as shown in Fig. 9 through the use of a counter. Since the light emission state of each light emitting element is measured thus based on a count value of the counter, the light emission state can be measured in consideration of a change in characteristic from the initial state of the light emitting element.

The counter counts the use state of the line head. For example, a counter for counting a cumulative operating time period of each light emitting element, a counter for counting the number of sheets of recording medium served for printing, a dot counter, or the like, is available as the counter. The count value obtained by such a counter is put into the control circuit 3. Based on the count value of the counter, the control circuit 3 outputs a control signal for light amount control to the light emitting element.

When the cumulative operating time period of each light emitting element is counted, the lowering of the emitted light amount due to deterioration caused by the long-term driving of the light emitting element can be measured surely. Thus, the emitted light amount can be restored by increasing the applied voltage or increasing the driving current. On the other hand, the counter for counting the number of sheets of recording medium can be provided near a paper feeding tray of the recording medium, or the like, Thus, the configuration of the counter can be simplified.

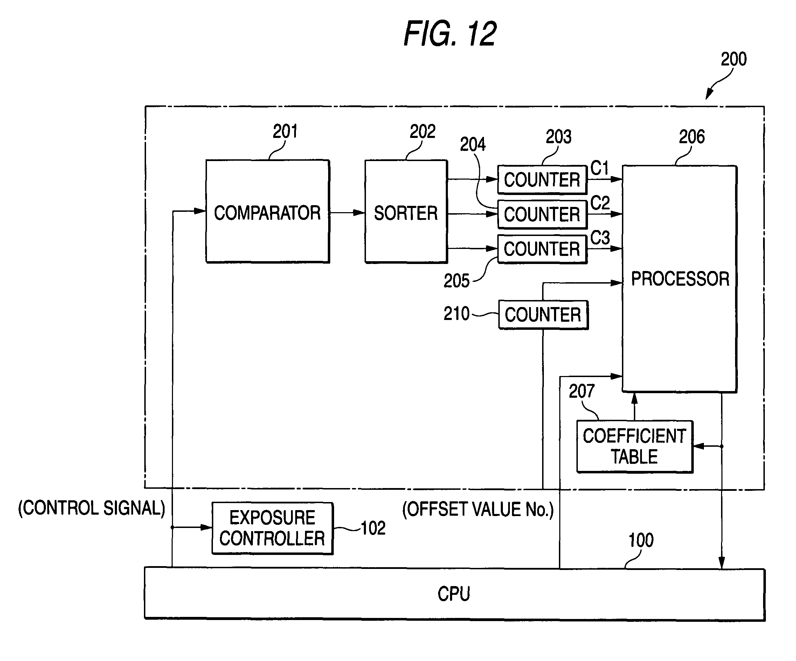

Fig. 12 is a block diagram showing an example of use of the counter described the above. The use state of the line head may be determined based on a count value of a toner counter. In this example, the number of printed dot arrays is counted based on the count value of the toner counter, so as to estimate the degree of aged deterioration of each light emitting element.

That is, when the light emitting element is driven by one and the same voltage or current in the condition that the aged deterioration of the light emitting element is in progress, the emitted light amount of the light emitting element is lowered. Therefore, when toner consumption is counted by dot, the use state of each light emitting element matched to the real situation can be measured so that the emitted light amount can be adjusted. Thus, appropriate halftone expression control can be performed.

In Fig. 12, the same control signals as control signals supplied .from a CPU 100 to an exposure controller 102 are supplied to a toner counter 200. The control signals are signals expanded to gradation values for respective toner colors based on an image signal supplied from an external device such as the main controller 8 in Fig. 2. Based on the control signals, a comparator 201 allows only signals corresponding to printed dots whose gradation values are not lower than a predetermined threshold value. Thus, the comparator 201 supplies the allowed signals to a sorter 202. The sorter 202 determines the printed dot array state based on an output signal of the comparator 201.

That is, the sorter 202 detects the number of dots constituting a printed dot array, and determines which pattern the printed dot array should be categorized into, a pattern of dots whose gradation values are not lower than the threshold value, a pattern of four consecutive dots or a pattern of an isolated dot. The sorter 202 outputs "1" to one of counters 203-205 in accordance with the determined pattern. Here, the pattern of an isolated dot means a pattern in which a pixel having a gradation value not lower than the threshold value is put between pixels whose gradation values are lower than the threshold value.

The counters 203, 204 and 205 are provided correspondingly to the pattern of dots whose gradation values are not lower than the threshold value, the pattern of four consecutive dots and the pattern of an isolated dot, respectively. In other words, each of the counters 203-205 counts the number of signals output from the sorter 202, so as to count the number of formed printed dot arrays having its corresponding pattern.

For example, assume that the control signal input into the comparator 201 is a signal corresponding to the pattern of an isolated dot. In this case, based on an output signal from the comparator 201, the sorter 202 concludes that the printed dot in question is an isolated dot. Then, the sorter 202 outputs "1" to the counter 205 while outputting "0" to the other counters 203 and 204. As a result of such a process, only the count value of the counter 205 indicating the number of formed isolated dots is increased by one.

In this event, however, there is no change in the count values of the other counters 203 and 204. In the same manner, when the control signal input into the comparator 201 is a signal corresponding to four consecutive dots, the count value of the counter 204 corresponding to the pattern of four consecutive dots is increased by one. In such a manner, the number of formed printed dots in each pattern is counted individually.

The count values C1, C2 and C3 are supplied to a processor 206. In addition to the count values C1, C2 and C3, an offset value No provided by a CPU 100 and an output from a coefficient table 207 are also supplied to the processor 206. On the other hand, the output of the processor 206 is supplied to the CPU 100 and the coefficient table 207. In the coefficient table 207, a plurality of sets of numerical values serving as candidates of "weighting coefficients" Kx, K1, K2 and K3 are stored in advance. One of the sets is selected in accordance with the output value of the processor 206.

Then, the processor 206 multiplies the count values C1, C2 and C3 output from the counters 203-205 respectively by the weighting coefficients K1, K2 and K3 selected and output from the coefficient table 207 respectively, and obtains the sum of those products. Further, the processor 206 adds the offset value No provided by the CPU 100 to the product of the obtained sum and the coefficient Kx. As a result of such calculation, toner consumption defined in Expression (1) is obtained.

$$\text{(Toner Consumption)} = Kx(K1{\cdot}C1 + K2{\cdot}C2 + K3{\cdot}C3) + No \tag{1}$$

where Kx designates a color-dependent coefficient differing from one color to another.

In such a manner, toner consumption in each light emitting element corresponding to each dot, that is, a parameter of the operating time period of each light emitting element is counted to grasp the use state of the line head. Thus, the lowering of the emitted light amount is compensated meticulously for each light emitting element so that deterioration in image quality can be prevented.

A counter 210 counts the operating time period of the line head measured by a timer or a program timer, that is, the cumulative operating time period of the light emitting elements. The counted result is supplied from the counter 210 to the processor 206 so that the cumulative operating time period of the light emitting elements is calculated. The cumulative operating time period of the light emitting elements calculated by the processor 206 is supplied to the CPU 100.

In such a manner, due to use of the counter 210, the characteristic proper to organic EL elements in which the emitted light amount is lowered when the operating time period exceeds a predetermined time period is compensated so that deterioration in image quality can be prevented. The counter 210 may be designed not to count the cumulative operating time period of the line head but to count an item serving as a parameter of the operating time period of the light emitting elements, for example, to count the number of printed sheets of recording paper or to count the number of pulses of a vertical synchronizing signal (Vsync) for image formation. The counter for counting the number of printed sheets of recording paper can be supported by a sensor provided in a sheet feeding path or the like. Thus, the configuration can be made simple.

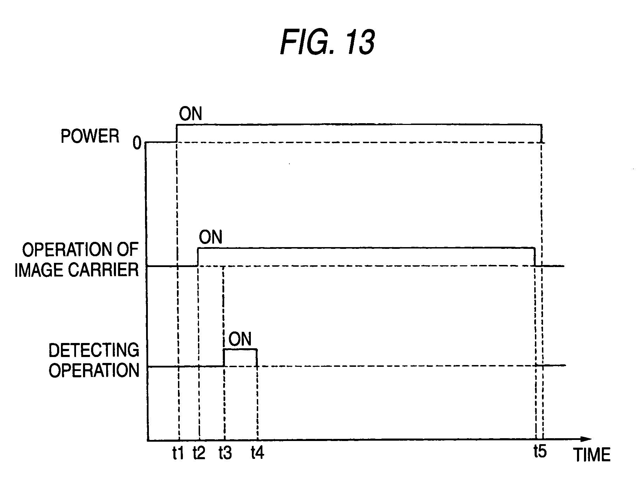

The timing with which the light emission state of each light emitting element is measured may be configured as shown in Fig. 13. Specifically, the power supply of the main body is turned on at a time t1. Next, the operation of the image carrier is started at a time t2. After that, the light emission state of each light emitting element is detected between a time t3 and a time t4. The operation of the image carrier is terminated at a time t5, and the body power supply is turned off at a time t6.

In this example, the light emission state of the light emitting element is detected at the time t3 after the operation of the image carrier is started at the time t2. Accordingly, the light emission state of the light emitting element is detected in the condition that an image is actually formed on the image carrier, that is, at the timing after the operation of the image carrier is started. Thus, exposure of a specific position of the image carrier to light can be prevented.

Incidentally, the timing when the light emission state of each light emitting element is detected can be set in accordance with the environment where the line head is used. For example, the timing may be set to be some timing after warming-up of a fuser is terminated or when there is a change in the ambient temperature. In this case, the gradation expression characteristic can be controlled in accordance with the environment where the line head is used.

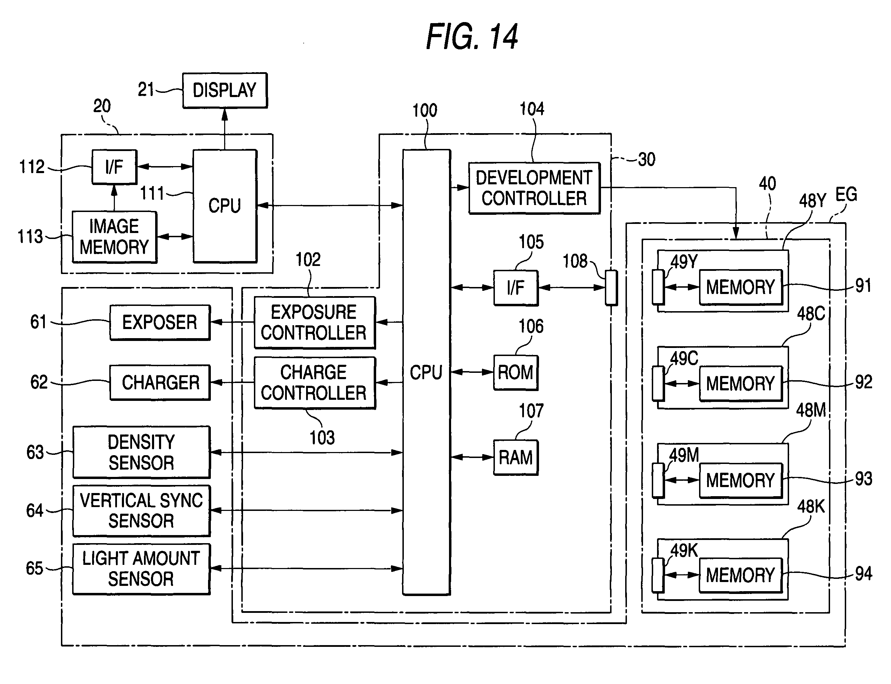

Fig. 14 is a block diagram showing the configuration of a control section of an image forming apparatus incorporating the line head of the invention. An image signal is supplied from an external device such as a host computer to a main controller 20 in response to an image forming request from a user. In this event, a command signal is transmitted from the main controller 20 to an engine controller 30. In response to the command signal, the engine controller 30 controls each part of an engine section EG so as to form an image corresponding to the image signal on a recording medium.

In the engine section EG, a charging bias is applied from a charge controller 103 to a charger 62 so as to charge the outer circumferential surface of a photoconductor uniformly with predetermined surface potential. Then, the outer circumferential surface of the photoconductor charged by the charger 62 is irradiated with a light beam from an exposer 61. The exposer 61 exposes the photoconductor to the light beam in accordance with a control command supplied from an exposure controller 102 so as to form an electrostatic latent image corresponding to the image signal. The exposer 61 is provided with suitable optical elements such as lenses, mirrors, etc.

When an image signal is supplied to a CPU 111 of the main controller 20 through an interface 112 by an external device such as a host computer, a CPU 101 of the engine controller 30 outputs a control signal corresponding to the image signal to the exposure controller 102 at predetermined timing. The photoconductor is irradiated with a light beam from the exposer 61 in accordance with the control signal so that an electrostatic latent image corresponding to the image signal is formed on the photoconductor.

A developing device 40 is controlled by a development controller 104. Here, a developing bias in which a DC voltage and an AC voltage have been superimposed is applied from the development controller 104 to a developing roller. Due to the developing bias applied thus, toner carried on the developing roller adheres partially to each part of the surface of the photoconductor in accordance with its surface potential. Thus, the electrostatic latent image on the photoconductor is developed as a toner image of a color corresponding to the toner.

A vertical synchronizing sensor 64 is a sensor for detecting a reference position of an intermediate transfer belt. The vertical synchronizing sensor 64 serves to obtain a synchronizing signal output in relation to the rotational driving of the intermediate transfer belt, that is, a vertical synchronizing signal $V_{sync}$. In this apparatus, the operation of each part of the apparatus is controlled based on the vertical synchronizing signal $V_{sync}$ so as to synchronize the operation timings of the parts to one another and superimpose toner images formed in respective colors on one another accurately.

Further, a density sensor 63 is provided to face the surface of the intermediate transfer belt. The density sensor 63 measures the optical density of a patch image formed on the outer circumferential surface of the intermediate transfer belt in a density control process. A light amount sensor 65 corresponds to the light amount sensor 9 in Fig. 11. In addition, through not shown, the voltage detector 26. in Fig. 10 may be provided to input a detected voltage of each light emitting element into the CPU 101.

As shown in Fig. 14, developing devices (toner cartridges) 48Y, 48C, 48M and 48K are provided with memories 91-94 for storing data about production lots and use histories of the developing devices, remaining amounts of internally stored toners, etc., respectively. Further, the developing devices 48Y, 48C, 48M and 48K are provided with connectors 49Y, 49C, 49M and 49K respectively.

The connectors 49Y, 49C, 49M and 49K are selectively connected to a connector 108 provided on the body side, in accordance with necessity. To this end, data are transmitted and received between the CPU 101 of the engine controller 30 and each memory 91-94 through an interface 105 so as to manage various information items such as management of expendable items about the corresponding developing device (toner cartridge). In this embodiment, mutual data exchange is attained by mechanical fitting between the body-side connector 108 and the developing device-side connector 49K or the like. However, data exchange may be attained in a non-contact manner using an electromagnetic technique such as wireless communication.

It is desired that the memories 91-94 for storing data proper to the developing devices 48Y, 48C, 48M and 48K respectively are nonvolatile memories which can store data even if the power is off or even if the developing devices are removed from the body. As such nonvolatile memories, for example, flash memories, ferroelectric random access memories (FRAMs), EEPROMs, etc. can be used.

In the image forming apparatus, a display 21 is provided as shown in Fig. 14. A predetermined message is displayed in accordance with a control command given by the CPU 111 if necessary. Thus, the user is notified of necessary information. For example, when there occurs an abnormality such as a failure of the apparatus or a paper jam, a message for notifying the user of that fact is displayed. When the remaining toner amount in one of the developing devices is not larger than a predetermined value, for example, when the remaining toner amount falls to a near end value which will be described later, a message for urging the user to exchange the developing device in question is displayed.

For example, a liquid crystal display can be used as the display 21. Alternatively, a warning lamp to light or blink may be used in accordance with necessity. Further, in addition to the message displayed for visual notification to the user, a warning device using a voice message recorded in advance or a sound such as a buzzer may be used, or these methods may be used in suitable combination.

An image memory 113 is provided for storing an image given through the interface 112 by an external device such as a host computer. The reference numeral 106 represents a ROM for storing computing programs to be executed by the CPU 101, control data for controlling the engine section EG, etc. The reference numeral 107 represents a RAM for temporarily storing computing results obtained by the CPU 101, or other data. An FRAM may be used as the RAM 107.

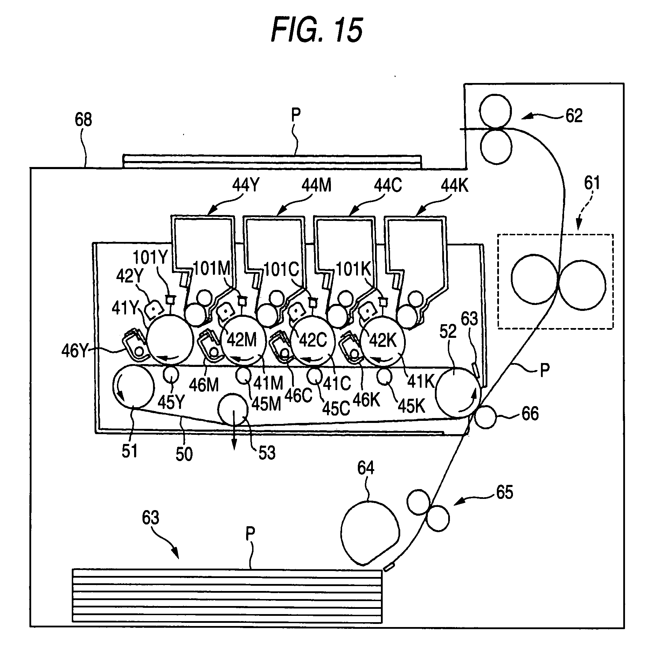

According to the invention, line heads configured thus can be used, for example, as exposure heads in image forming apparatus for forming a color image in an electrophotographic manner. Fig. 15 shows such an image forming apparatus using line heads. This image forming apparatus is designed as tandem type image forming apparatus in which four line heads 101K, 109C, 101 M and 101Y configured similarly are disposed in exposure positions of four photoconductor drums (image carriers) 41K, 49C, 41M and 41Y configured similarly and correspondingly to the line heads 101K, 109C, 101 M and 101 Y, respectively.

As shown in Fig. 15, the image forming apparatus is provided with a driving roller 51, a follower roller 52, a tension roller 53 and an intermediate transfer belt 50. The intermediate transfer belt 50 is stretched due to tension applied thereto by the tension roller 53, and driven to circulate in the illustrated arrow direction (counterclockwise). The photoconductors 41K, 49C, 41 M and 41Y having photoconductor layers on their outer circumferential surfaces and serving as four image carriers are disposed at predetermined intervals with respect to the intermediate transfer belt 50.

The suffixes K, C, M and Y added to the reference numerals designate black, cyan, magenta and yellow respectively. The reference numerals 41K, 49C, 41 M and 41Y represent black, cyan, magenta and yellow photoconductors respectively. The same thing is applied to the other members. The photoconductors 41K, 49C, 41 M and 41Y are driven to rotate in the illustrated arrow directions (clockwise) synchronously with the driving of the intermediate transfer belt 50 respectively.

A charger (corona charger) 42 (K, C, M, Y) and the line head 101 (K, C, M, Y) according to the invention as described above are provided around each photoconductor 41 (K, C, M, Y). The charger 42 (K, C, M, Y) charges the outer circumferential surface of the photoconductor 41 (K, C, M, Y) uniformly. The line head 101 (K, C, M, Y) performs a line scan in turnupon the outer circumferential surface charged uniformly by the charger 42 (K, C, M, Y). The line scan is performed in sync with the rotation of the photoconductor 41 (K, C, M, Y).

The image forming apparatus is also provided with developing devices 44 (K, C, M and Y), primary transfer rollers 45 (K, C, M and Y) and cleaners 46 (K, C, M and Y). Each developing device 44 (K, C, M, Y) imparts toner as developer to an electrostatic latent image formed by the line head 101 (K, C, M, Y), so as to form a visible image (toner image). Each primary transfer roller 45 (K, C, M, Y) serves as a transfer unit for transferring the toner image developed by the developing device 44 (K, C, M, Y) in turn to the intermediate transfer belt 50 as a target of primary transfer. Each cleaner 46 (K, C, M, Y) removes the toner remaining on the surface of the photoconductor 41 (K, C, M, Y) after the transfer.

Here, each line head 101 (K, C, M, Y) is disposed so that the array direction of the line head 101 (K, C, M, Y) is parallel to the generatrix of the photoconductor drum 41 (K, C, M, Y). In addition, the light emission energy peak wavelength of the line head 101 (K, C, M, Y) is set substantially equal to the sensitivity peak wavelength of the photoconductor 41 (K, C, M, Y).

For example, each developing device 44 (K, C, M, Y) uses a non-magnetic monocomponent toner as developer. The monocomponent toner is conveyed to a developing roller, for example, by a supply roller. The film thickness of the developer adhering to the surface of the developing roller is regulated by a control blade, while the developing roller is brought into abutment or pressure-contact against the photoconductor 41 (K, C, M, Y). Thus, the developer is attached to the photoconductor 41 (K, C, M, Y) in accordance with the potential level thereof so as to be developed as a toner image.

Black, cyan, magenta and yellow toner images formed by the four monochrome toner image forming stations configured thus are primarily transferred in turn onto the intermediate transfer belt 50 by primary-transfer bias applied to the primary transfer rollers 45 (K, C, M and Y). A full-color toner image obtained by superimposing the four toner images on the intermediate transfer belt 50 is secondarily transferred onto a recording medium P such as paper by a secondary transfer roller 66. When the recording medium P passes through a fixing roller pair 61 as a fixing portion, the full-color toner image is fixed on the recording medium P. By an ejection roller pair 62, the recording medium P is ejected onto an ejection tray 68 formed in a top portion of the apparatus.

Incidentally, in Fig. 15, the reference numeral 63 represents a sheet feeding cassette in which a large number of recording media P are stacked and retained. A pickup roller 64 feeds the recording media P from the sheet feeding cassette 63 one by one. A gate roller pair 65 regulates the timing when the recording medium P is fed to a secondary transfer position which is formed by a secondary transfer roller 66 and the intermediate transfer belt 50. A cleaning blade 67 removes toner remaining on the surface of the intermediate transfer belt 50 after the secondary transfer. A counter for counting the number of sheets of recording paper fed for printing is provided in a suitable position in a conveyance path of the recording media P, for example, in a suitable position between the sheet feeding cassette 63 and the gate roller pair 65.

With the configuration in which an array of light emitting elements each of which is constituted by an organic EL element is used as an image writer, the apparatus can be downsized as compared with an apparatus using laser scanning optics. According to the invention, in the tandem type image forming apparatus as shown in Fig. 15, in which constant voltage/current control is performed on light emitting elements, it is possible to prevent the image quality from deteriorating when the operating time of each light emitting element exceeds a predetermined time period.

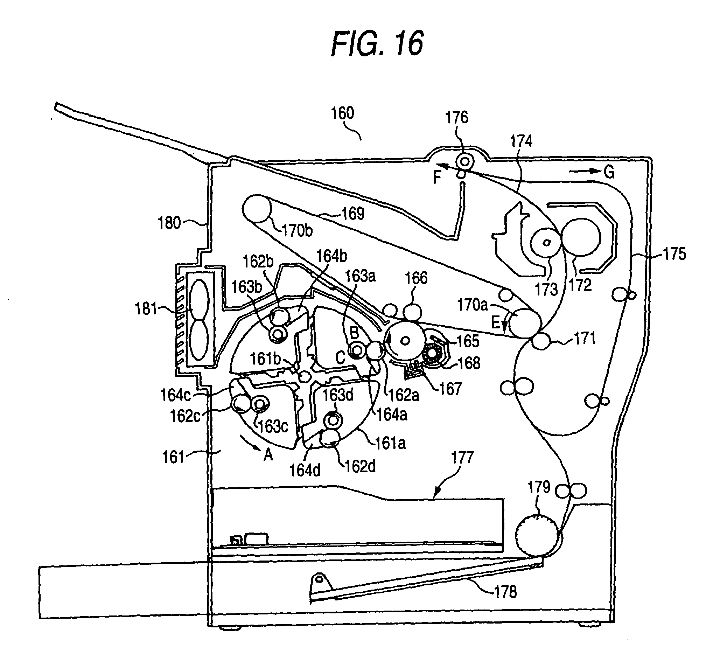

Next, description will be made about another example of image forming apparatus incorporating the line head of the invention with reference to Fig. 16. This image forming apparatus 160 comprises a developing device 161 having a rotary configuration, a photoconductor drum 165 serving as an image carrier, an image writer (line head) provided with an organic EL element array, an intermediate transfer belt 169, a sheet conveyance path 174, a heating roller 172 of a fuser, and a sheet feeding tray 178.

In the developing device 161, a developing rotary 161a rotates around a shaft 161b in the direction of the arrow A. The inside of the developing rotary 161a is divided into four. The four portions are provided with four image forming units of yellow (Y), cyan (C), magenta (M) and black (K) respectively. The reference numerals 162a-162d designate developing rollers disposed in the four color image forming units respectively, so as to rotate in the direction of the arrow B. The reference numerals 163a-163d designate toner supply rollers rotating in the direction of the arrow C. The reference numerals 164a-164d designate control blades for regulating toner thickness.

The photoconductor drum 165 is driven in the direction of the arrow D opposite to the developing roller 162a by a not-shown drive motor, for example, a step motor.

The intermediate transfer belt 169 is stretched between a driving roller 170a and a follower roller 170b. The driving roller 170a is coupled with the aforementioned drive motor of the photoconductor drum 165 so as to transmit power to the intermediate transfer belt. Driven by the drive motor, the driving roller 170a of the intermediate transfer belt 169 is rotated in the direction of the arrow E opposite to the photoconductor drum 165.

A plurality of conveyance rollers, an ejection roller pair 176, etc. are provided in the sheet conveyance path 174 so as to convey a recording medium such as paper. A one-side image (toner image) carried on the intermediate transfer belt 169 is transferred onto one side of the paper in the position of a secondary transfer roller 171. The secondary transfer roller 171 is retractably brought into contact with the intermediate transfer belt 169 by a clutch mechanism so that the image is transferred to the paper.

The paper having the image transferred thereto thus is next subjected to a fixing process in a fuser having a heater. The fuser is provided with a heating roller 172 and a pressure roller 173. The paper subjected to the fixing process is pulled in by the ejection roller pair 176 so as to travel in the direction of the arrow F. When the ejection roller pair 176 rotate reversely in this state, the traveling direction of the paper is reversed so as to travel in the direction of the arrow G in a conveyance path 175 for double-sided printing.

The reference numeral 177 designates an electrical component box, and a pickup roller 179 is provided in the exit of the sheet feeding tray 178. The number of sheets of paper fed for printing is counted by a sensor provided in a suitable position in the sheet conveyance path, for example, near the sheet feeding tray 178.

For example, a low-speed brushless motor is used as the drive motor for driving the conveyance rollers in the paper conveyance path. On the other hand, a step motor is used for the intermediate transfer belt 169 so as to attain color registration correction or the like. These motors are controlled by signals from a not-shown controller.

In the illustrated state, a yellow (Y) electrostatic latent image is formed on the photoconductor drum 165. Due to a high voltage applied to the developing roller 162a, a yellow image is formed on the photoconductor drum 165. When both of back-side and front-side yellow images are carried on the intermediate transfer belt 169, the developing rotary 161 a rotates at an angle of 90 degrees in the direction of the arrow A.

Rotating a full tum, the intermediate transfer belt 169 returns to the position of the photoconductor drum 165. Next, second-side cyan (C) images are formed on the photoconductor drum 165, and carried on the intermediate transfer belt 169 so as to be superimposed on the yellow images respectively. In the same manner, the 90-degree rotation of the developing rotary 161a and the full-turn rotation of the intermediate transfer belt 169 whenever images have been carried thereon are then repeated.

The intermediate transfer belt 169 rotates four turns so as to carry two color images of the four colors. After that, the rotation position of the intermediate transfer belt 169 is controlled so that the images are transferred to the paper in the position of the secondary transfer roller 171. The paper supplied from the paper feed tray 178 is conveyed in the conveyance path 174, and one of the color images is transferred to one side of the paper in the position of the secondary transfer roller 171. The paper having the color image transferred to its one side is reversed by the ejection roller pair 176 as described previously, and waits ready in the conveyance path. After that, the paper is conveyed to the position of the secondary transfer roller 171 at proper timing, and the other color image is transferred to the other side of the paper. An exhaust fan 181 is provided in a housing 180.

According to the invention, in rotary type image forming apparatus as shown in Fig. 16, in which constant voltage/current control is performed on light emitting elements, it is possible to prevent the image quality from deteriorating when the operating time of each light emitting element exceeds a predetermined time period. In addition, in tandem type and rotary type image forming apparatus having an intermediate transfer member, in which constant voltage/current control is performed on light emitting elements, it is possible to prevent the image quality from deteriorating when the operating time of each light emitting element exceeds a predetermined time period.

Description has been made about the line head and the image forming apparatus according to the invention based on their embodiments. The line head and the image forming apparatus according to the invention are not limited to the embodiments, but various modifications can be made thereon.

**Claims**

1. A line head, comprising:

    at least one light emission array including a plurality of light emitting elements arrayed in a first direction, each of which is an organic electroluminescence element;
    a controller, which performs a constant voltage control with respect to the light emitting elements;
    a current detector, which collectively detects a drive current flowing in each of the light emitting elements; and
    a checker, which checks light emitting characteristics of at least one of the light emitting elements in accordance with the detected drive current.

2. The line head as set forth in claim 1, wherein the checker measures an emitted light amount of each of the at least two of the light emitting elements.

3. The line head as set forth in claim 1, wherein the detected drive current is input to the controller in a feed back control manner.

4. The line head as set forth in claim 1, wherein the checker checks whether the at least one of the light emitting elements is related to pixel defect.

5. The line head as set forth in claim 1, wherein the check is performed with respect to each of the light emitting elements.

6. The line head as set forth in claim 1, wherein the light emitting elements are divided into a plurality of groups, and the check is performed with respect to each of the groups.

7.  The line head as set forth in claim 1, wherein the check is simultaneously performed with respect to the respective light emitting elements.

8.  The line head as set forth in claim 1, wherein each of the light emitting elements is driven by a field effect transistor, and a condenser is connected between a gate electrode and a drain electrode of the field effect transistor.

9.  The line head as set forth in claim 1, wherein the constant current control is performed by increasing a drive voltage for the at least one of the light emitting elements, when the result of the comparison indicates that an emitted light amount of the at least one of the light emitting elements becomes lower than a threshold value.

10. The line head as set forth in claim 1, wherein a plurality of light emission arrays are arranged in a second direction which is perpendicular to the first direction.

11. An image forming apparatus, comprising:

    an image carrier, having a photoconductive surface;
    the line head as set forth in claim 1, which emits light to form an electrostatic latent image on the photoconductive surface; and
    a developing device, which supplies developer onto the photoconductive surface to make the electrostatic latent image visible.

12. A line head, comprising:

    at least one light emission array including a plurality of light emitting elements arrayed in a first direction, each of which is an organic electroluminescence element;
    a storage, which stores a reference light emission characteristics;
    a detector, which quantitatively detects a light emitting state of at least one of the light emitting elements to obtain a detected amount; and
    a controller, which controls an emitted light amount of the at least one of the light emitting elements in accordance with the detected amount and the reference light emission characteristics.

13. The line head as set forth in claim 12, wherein the detector detects an emitted light amount of the at least one of the light emitting elements.

14. The line head as set forth in claim 12, wherein the detector detects a drive current flowing in the at least one of the light emitting elements.

15. The line head as set forth in claim 12, wherein the control of the emitted light amount is performed with respect to each of the light emitting elements.

16. The line head as set forth in claim 12, wherein the light emitting elements are divided into a plurality of groups, and the control of the emitted light amount is performed with respect to each of the groups.

17. The line head as set forth in claim 12, wherein the control of the emitted light amount is simultaneously performed with respect to the respective light emitting elements.

18. The line head as set forth in claim 12, further comprising a counter, which counts an amount indicative of a used state of at least one of the light emitting elements,
    wherein the detector detects the light emitting state at a timing according to the amount counted by the counter.

19. The line head as set forth in claim 18, wherein the counter counts a cumulative operating time period of the at least one of the light emitting elements.

20. The line head as set forth in claim 18, wherein the counter counts the number of a recording medium on which an image formed by the line head is recorded.

**21.** The line head as set forth in claim 18, wherein the counter counts the number of formation of a dot array having a predetermined pattern.

**22.** The line head as set forth in claim 12, further comprising a temperature detector, which detects an ambient temperature of the line head,
wherein the detector detects the light emitting state at a timing according to the ambient temperature.

**23.** An image forming apparatus, comprising:

an image carrier, having a photoconductive surface;
the line head as set forth in claim 12, which emits light to form an electrostatic latent image on the photoconductive surface; and
a developing device, which supplies developer onto the photoconductive surface to make the electrostatic latent image visible.

**24.** The image forming apparatus as set forth in claim 23, wherein the detector detects the light emitting state after the image carrier is activated.

## FIG. 1

EP 1 598 200 A2

EP 1 598 200 A2

*FIG. 2A*

*FIG. 2B*

18

FIG.3

## FIG. 4

FIG. 5

## FIG. 6

# FIG. 7

```
                    ( START )──S1
                         │
                         ▼
              ┌──────────────────┐
              │  RESET COUNTER   │──S2
              └──────────────────┘
                         │
                         ▼
         ┌────────────────────────────────┐
         │ ACTIVE LIGHT EMITTING ELEMENT  │──S3
         │ DESIGNATED BY COUNTER VALUE    │
         └────────────────────────────────┘
                         │
                         ▼
              ┌──────────────────┐
              │ MEASURE EMITTED  │──S4
              │   LIGHT AMOUNT   │
              └──────────────────┘
                         │
                         ▼
                        S5
             ◇ MEASURED                      NO
               EMITTED LIGHT AMOUNT IS   (PIXEL DEFECT)
               GREATER THAN A                  │
               PRESCRIBED                      ▼
               AMOUNT? ◇          ┌──────────────────┐
                         │    S6──│ STORE COUNTER    │
                    YES          │ VALUE IN MEMORY  │
                  (NORMAL)       └──────────────────┘
                         │              │
                         ◄──────────────┘
                         ▼
              ┌──────────────────┐
              │   INCREMENT      │──S7
              │  COUNTER VALUE   │
              └──────────────────┘
                         │
                         ▼
                        S8
            ◇ COUNTER VALUE
     YES      IS LESS THAN TOTAL NUMBER OF LIGHT
              EMITTING ELEMENTS? ◇
                         │
                        NO
                         ▼
                    ( END )──S9
```

FIG. 8A

FIG. 8B

## FIG. 9

EP 1 598 200 A2

EP 1 598 200 A2

## FIG. 10

FIG. 11

# FIG. 12

## FIG. 13

FIG. 14

## FIG. 15

EP 1 598 200 A2

# FIG. 16

EP 1 598 200 A2

## FIG. 17

| DATA No. | BIT DATA | | | | | | | | GRADATION DATA |
|---|---|---|---|---|---|---|---|---|---|
| 1 | 0 | 0 | 0 | 0 | 0 | 0 | 0 | 0 | 0 |
| 2 | 0 | 0 | 0 | 0 | 0 | 1 | 0 | 0 | 4 |
| 3 | 0 | 0 | 0 | 0 | 1 | 0 | 0 | 0 | 8 |
| 4 | 0 | 0 | 0 | 1 | 0 | 0 | 0 | 0 | 16 |
| 5 | 0 | 0 | 1 | 0 | 0 | 0 | 0 | 0 | 32 |
| 6 | 0 | 1 | 0 | 0 | 0 | 0 | 0 | 0 | 64 |
| 7 | 1 | 0 | 0 | 0 | 0 | 0 | 0 | 0 | 128 |
| 8 | 1 | 1 | 1 | 1 | 1 | 1 | 1 | 1 | 255 |

EP 1 598 200 A2

## FIG. 18

80

GRADATION
DATA ─────────── 71a
GRADATION DATA
MEMORY
71b
GRADATION DATA
MEMORY    • • •

81a
D/A CONVERTER
81b
D/A CONVERTER    • • •

38a

38b

SELECT
SIGNAL ───────
LIGHT EMITTING
ELEMENT
LIGHT EMITTING
ELEMENT    • • •

37a

Za

Zb

FIG. 19A

Ea

0  63  127    0  63  127    0  63  127    0  63  127 ──►TIME t

FIG. 19B

Eb

Wa

──►TIME t

FIG. 19C

Ec

Wb

──►TIME t

## FIG. 20

PRINT DENSITY

INPUT DENSITY